# EUROPÄISCHE PATENTSCHRIFT

(11) **EP 2 998 802 B1**
(45) Veröffentlichungstag und Bekanntmachung des Hinweises auf die Patenterteilung: **03.04.2019**
(21) Anmeldenummer: 14185685.6
(22) Anmeldetag: 22.09.2014
(51) Int. Cl.: H02J 3/14, H02J 13/00, H02J 3/00

(54) **Energieverteilsystem für ein Energienetz**
Energy distribution system for an energy network
Système de distribution d'énergie pour un réseau d'énergie

(43) Veröffentlichungstag der Anmeldung: 23.03.2016
(73) Patentinhaber: LEVION Technologies GmbH, 8020 Graz (AT)
(72) Erfinder: Hofer, Michael, 8010 Graz (AT)
(74) Vertreter: Wirnsberger, Gernot

(56) Entgegenhaltungen:
- EP-A1- 2 485 361
- EP-A1- 2 701 266
- DE-A1-102010 017 264
- DE-A1-102010 043 611
- DE-U1-202011 005 048
- DE-U1-202012 101 240

## Beschreibung

Die Erfindung betrifft ein Energieverteilsystem mit Energiebereitstellern zum Bereitstellen von Energie für ein Energienetz und mit Energieverbrauchern, deren Energiebedarf aus dem Energienetz abzudecken ist, wobei eine Energieverteileinheit zum Verteilen der bereitgestellten Energie aus dem Energienetz an die Energieverbraucher vorgesehen ist. Das Dokument EP 2 136 450 A1 offenbart so ein Energieverteilsystem, bei dem einzelne Gruppen von Energiebereitstellern und Energieverbrauchern über eine Energieverteileinheit mit dem Energienetz verbunden sind. Die bekannte Energieverteileinheit bildet eine zentrale Steuereinheit zum Steuern des Energieverbrauchs der Energieverbraucher. Die Steuereinheit ermittelt anhand von Wetterdaten und Erfahrungsprofilen die von lokalen Energiebereitstellern, wie Solarenergie und Windenergie, zu erwartende bereitgestellte Energie. Energieverbraucher sind über Bedarfskommunikationseinheiten mit der zentralen Steuereinheit verbunden und melden den aktuell vorliegenden Energiebedarf worauf die zentrale Steuereinheit einen Energieverbraucher nach dem anderen mit Energie versorgt. Bei dem bekannten Energieverteilsystem hat sich als Nachteil erwiesen, dass es beim Ausfall der zentralen Steuereinheit zu Problemen der Abdeckung des Energiebedarfs von Energieverbrauchern kommen kann, da die Energie ausschließlich über die zentrale Steuereinheit an die Energieverbraucher abgegeben wird. So kann es passieren, dass der Tiefkühlschrank eines Hauses bei Ausfall der zentralen Steuereinheit des Energieverbrauchs des Hauses nicht mehr kühlen kann und das Kühlgut beschädigt wird. Das bekannte Energieverteilsystem legt zwar bestimmte Prioritäten für das Einschalten bestimmter Energieverbraucher fest, die Steuerung des einzelnen Energieverbrauchers wird aber wirkungslos, wenn die zentrale Steuereinheit den aktuell vorliegenden Energiebedarf des Energieverbrauchers nicht entsprechend der tatsächlichen Priorität beurteilt. Hierdurch kann es zu einer zeitweise unterbrochenen oder überhaupt zu einer Unterversorgung einzelner Energieverbraucher kommen. Die DE 20 2012 101 240 U1 zeigt ein Energiemanagementsystem. Der Erfindung liegt die Aufgabe zugrunde ein Energieverteilsystem zu schaffen, bei dem die vorstehend angeführten Nachteile vermieden werden. Erfindungsgemäß wird diese Aufgabestellung mittels der Merkmale des unabhängigen Anspruchs 1 gelöst. Jeder Energieverbraucher ist direkt mit dem Energienetz zum Abdecken seines Energieverbrauchs verbunden und jeder Energieverbraucher weist eine Bedarfskommunikationseinheit auf die zum Anmelden eines zukünftigen Energiebedarfs des Energieverbrauchers bei der Energieverteileinheit ausgebildet ist und die zum Empfangen von Start-Empfehlungen von der Energieverteileinheit ausgebildet ist, um mit dem angemeldeten Energieverbrauch durch den Energieverbraucher zu beginnen. Durch die direkte Verbindung jedes Energieverbrauchers mit dem Energienetz ist der Vorteil erhalten, dass die Steuerung jedes einzelnen Energieverbrauchers als Master in dem Energieverteilsystem lokal entscheidet, ob jetzt ein unmittelbarer Energiebedarf besteht der gedeckt werden muss. Hierdurch kann zum Beispiel der Tiefkühlschrank entsprechend seiner eigenen Steuerung entscheiden, dass, wenn die Kühltemperatur eine kritische Höchsttemperatur erreicht hat, jetzt gekühlt werden muss und kann seinen Energiebedarf unabhängig und selbständig aus dem Energienetz abdecken. Auf der anderen Seite erhält die Steuerung jedes Energieverbrauchers über ihre Bedarfskommunikationseinheit Start-Empfehlungen von der Energieverteileinheit, wenn es aus übergeordneten Gründen gerade günstig wäre jetzt Energie zu verbrauchen. Solche übergeordneten Gründe sind dann gegeben, wenn wetterabhängige lokale Energiebereitsteller, wie Solarenergie oder Windenergie, gerade viel Energie erzeugen oder, wenn das Smartmeter des Stromanbieters oder andere Datenquellen wie beispielsweise Webservices angeben, dass der Strompreis aufgrund eines Überangebots oder aufgrund von billigerem Nachtstrom gerade günstig ist. Energieverbraucher, die ihren Energieverbrauch über die nächsten Minuten, Stunden oder Tage etwa abschätzten können melden über ihre Bedarfskommunikationseinheit bei der Energieverteileinheit ihren zukünftigen Energiebedarf an. Die Energieverteileinheit ist dazu ausgebildet diese Bedarfsanfragen je nach Priorität und gewünschter Leistungsaufnahme im Hinblick auf die gerade lokal vorhandene Energie zeitlich zu staffeln und Start-Empfehlungen an die Energieverbraucher abzugeben, die einen Energiebedarf angemeldet haben. Hierdurch kann der gesamte Energieverbrauch in dem Energienetz eines Hauses, einer Fabrik oder einer ganzen Stadt reduziert werden, da insbesondere dann Energie verbraucht wird, wenn diese günstig oder wetterbedingt vorhanden ist.
Um bestehende Energieverbraucher ohne Bedarfskommunikationseinheit in das Energieverteilsystem eines Hauses mit einzubinden können als separate Einheit ausgebildete Bedarfskommunikationseinheiten zwischen einen bestehenden Energieverbraucher und das Energienetz geschaltet werden.

Weitere vorteilhafte Ausgestaltungen des erfindungsgemäßen Energieverteilsystems werden im Folgenden anhand der Figuren näher erläutert.
Figur 1 zeigt ein Energieverteilsystem in einem Haus.
Figur 2 zeigt Übertragungsmöglichkeiten der Energieverteileinheit.

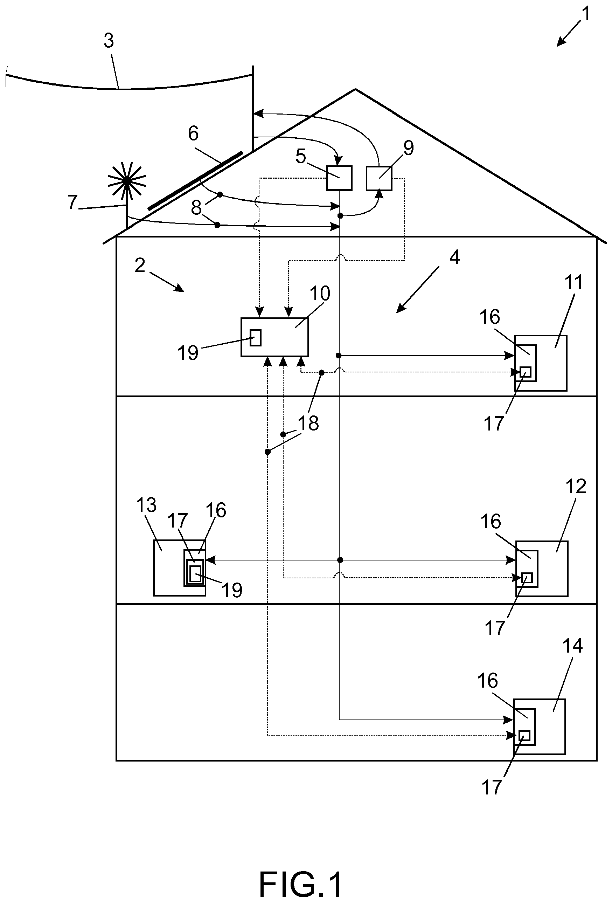

Figur 1 zeigt ein Haus 1 in dem ein Energieverteilsystem 2 zur sinnvollen Nutzung elektrischer Energie vorgesehen ist. Das Haus 1 ist über eine Stromleitung 3, die Teil eines Energienetzes 4 ist, mit übergeordneten Energiebereitstellern, wie Wasserkraftwerken oder kalorischen Kraftwerken, verbunden, die zum Bereitstellen von Energie für das Energienetz 4 vorgesehen sind. Das Energienetz 4 des Hauses 1 ist über ein Smartmeter 5 mit der Stromleitung 3 verbunden. Das Smartmeter 5 misst den Energieverbrauch des Hauses und gibt den Messwert an den übergeordneten Energiebereitsteller zur Erstellung der Stromrechnung ab und stellt Information über den aktuellen Energiepreis von dem übergeordneten Energiebereitsteller am Smartmeter zur Verfügung. Der aktuelle Energiepreis richtet sich nach dem Angebot an Energie und der Nachfrage an Energie in dem übergeordneten Energienetz 4 und ist typischerweise während der Nacht billiger als am Tag oder an windigen sonnigen Tagen im Sommer billiger als an nebeligen Wintertagen.

Auf dem Dach des Hauses 1 sind weiters lokale Energiebereitsteller in Form einer Solarpannels 6 und eines Windrades 7 vorgesehen, die abhängig von den Wetterbedingungen Strom über Stromleitungen 8 an das Energienetz 4 des Hauses 1 abgeben. Die von den lokalen Energiebereitstellern in das Energienetz 4 des Hauses 1 eingespeiste Energie wird entweder von den Energieverbrauchern in dem Haus 1 unmittelbar verbraucht, in einem in Figur 1 nicht dargestellten Akkumulator gespeichert oder über ein Speise-Smartmeter 9 in das übergeordnete Energienetz 4 eingespeist. Der von dem übergeordneten Energiebereitsteller für die über das Speise-Smartmeter 9 eingespeiste Energie vergütete Energiepreis entspricht in der Regel dem Energiepreis, der am Smartmeter 5 angegeben ist, allerdings muss für den vom Energiebetreiber gelieferten Strom noch zusätzlich eine Netzgebühr gezahlt werden. Es ist somit vorteilhaft möglichst viel des aktuellen lokalen Energiebedarfs durch die von den lokalen Energiebereitsteller aktuell bereitgestellte Energie abzudecken und somit den Energiebedarf aus dem übergeordneten Energienetz 4 zu senken oder gar gänzlich einzustellen. Weiters ist es vorteilhaft Energieverbauchsspitzen, insbesondere zu Zeiten wenn der Energiepreis hoch ist zu vermeiden, da hierdurch die Energiekosten überproportional steigen.

Das Energieverteilsystem 2 des Hauses 1 weist nunmehr eine Energieverteileinheit 10 zum Verteilen der von den übergeordneten und den lokalen Energiebereitstellern bereitgestellten Energie an die Energieverbraucher des Hauses 1 auf. In dem Haus 1 sind beispielhaft vier Energieverbraucher in Form eines Warmwasserboilers 11, eines Geschirrspülers 12, einer Waschmaschine 13 und eines Tiefkühlschranks 14 dargestellt. Jeder dieser Energieverbraucher ist über Stromleitungen 15 über den Smartmeter 5 direkt mit dem Energienetz 4 verbunden. Jeder dieser Energieverbraucher weist eine Steuerung 16 auf, die den normalen Betrieb des Energieverbrauchers steuert und somit den Energieverbrauch und den Zeitpunkt des Auftretens des Energieverbrauchs beeinflusst. So hat beispielsweise der Benutzer des Warmwasserboilers 11 an der Steuerung des Warmwasserboilers 11 eine Warmwassertemperatur von 90 Grad Celsius eingestellt, weshalb die Steuerung des Warmwasserboilers 11 bei einem Abfall der Wassertemperatur in den Warmwasserboiler unter 85 Grad das Wasser elektrisch auf 95 Grad aufheizt. Während dieser Aufheizphase von beispielsweise 15 Minuten hat der Warmwasserboiler 11 einen relativ hohen Energiebedarf entsprechend seiner Anschlussleistung von beispielsweise 4 kW, danach besteht für möglicherweise mehrere Stunden kein Energiebedarf mehr.

Die Steuerung 16 des Warmwasserboilers 11 ermittelt Erfahrungswerte, wann üblicherweise Energiebedarf besteht, wobei diese Erfahrungswerte beispielsweise so aussehen könnten: In der Früh duschen die Bewohner des Hauses 1 und es muss ein oder mehrmals das Warmwasser in dem Warmwasserboiler 11 aufgeheizt werden. Ab 10 Uhr Vormittags besteht über mehrere Stunden kein Energiebedarf, da der Warmwasserboiler 11 gut isoliert ist und das Wasser nicht auf 85 Grad absinkt. Abends besteht neuerlich Energiebedarf und ab 22h bis 6h Früh wieder kein Energiebedarf.

Die Steuerung 16 des Warmwasserboilers 11 weist nunmehr eine Bedarfskommunikationseinheit 17 auf, die über Kommunikationsleitungen 18 mit der Energieverteileinheit 10 verbunden ist. Durch das Duschen um 21:30h ist die Wassertemperatur in dem Warmwasserboiler 11 auf 85 Grad abgesunken. Anhand der Erfahrungswerte weiß die Steuerung 16 beziehungsweise nimmt zumindest an, dass erst um 6h Früh wieder die volle Menge an Warmwasser mit 95 Grad zur Verfügung stehen muss. Die Bedarfskommunikationseinheit 17 meldet hierauf einen zukünftigen Energiebedarf mit einem Leistungsprofil von gleichmäßigen 4 kW für eine Dauer von 15 Minuten an, wobei 5:45h der spätest mögliche Zeitpunkt zum Abdecken des Energiebedarfs ist, da ja um 6h Früh das Warmwasser bereitgestellt sein muss.

Auch der Geschirrspüler 12 weist eine Steuerung 16 auf, die die unterschiedlichen Reinigungsprogramme mit unterschiedlichen Leistungsprofilen des Energiebedarfs steuert. Während der Aufwärmphase des Warmwassers zum Geschirrspülen besteht ein hoher Energiebedarf von 3 kW und beispielsweise beim Abpumpen des schmutzigen Wasser durch die Pumpe ein Energiebedarf von nur 1 kW. Aus Erfahrungswerten der Benuzung des Geschirrspülers 12 oder durch explizite Programmierung durch den Benutzer des Geschirrspülers 12 steht fest, dass der um 21h nach dem Abendessen eingestellte Geschirrspüler 12 das Geschirr bis um 6:30h in der Früh gespült haben muss, da dieses dann ausgeräumt werden soll. Die Bedarfskommunikationseinheit 17 des Geschirrspülers 12 meldet hierauf nach dem Einstellen des Geschirrspülers am Abend einen zukünftigen Energiebedarf mit einem Leistungsprofil entsprechend dem eingestellten Reinigungsprogramm für eine dem Reinigungsprogramm entsprechende Dauer an, wobei 6:00h der spätest mögliche Zeitpunkt zum Abdecken des Energiebedarfs ist, da ja um 6:30h Früh das Geschirr gewaschen sein muss.

Auch der Tiefkühlschrank 14 weist eine Steuerung 16 auf, die eine vom Benutzer eingestellte Kühltemperatur von -15 Grad Celsius überwacht. Wenn die Kühltemperatur eine Maximaltemperatur von -13 Grad erreicht hat, dann springt das Kühlaggregat mit einem Energiebedarf von gleichmäßig 200 W für eine Dauer von ca. drei Minuten an, bis die Kühltemperatur wieder auf -17 Grad gesunken ist. Da der Tiefkühlschrank 14 in der Nacht nur selten geöffnet wird ist der Energiebedarf über Nacht geringer als beispielsweise am Abend, wenn der Einkauf eingekühlt und das Abendessen gekocht wird. Da der Tiefkühlschrank 14 gut isoliert ist springt das Kühlaggregat in der Nacht nur einmal je Stunde an, weshalb der Energiebedarf des Tiefkühlschranks 14 in der Nacht recht gut planbar ist. Die Bedarfskommunikationseinheit 17 des Tiefkühlschranks 14 meldet somit nach dem Abschalten des Kühlaggregats um 23:12h einen zukünftigen Energiebedarf mit einem Leistungsprofil von 200 W für eine Dauer von drei Minuten an, wobei 00:12h der spätest mögliche Zeitpunkt zum Abdecken des Energiebedarfs ist, da ja nach einer Stunde üblicherweise die Kühltemperatur auf die Maximaltemperatur von -13 Grad gestiegen ist.

Bei der Energieverteileinheit 10 wird von den Bedarfskommunikationseinheiten 17 der Energieverbraucher laufend zukünftiger Energiebedarf angemeldet, der von der Energieverteileinheit 10 verarbeitet wird. Hierbei ermittelt und gibt die Energieverteileinheit 10 Start-Empfehlungen derart, um insgesamt einen möglichst gleichmäßigen niedrigen Energieverbrauch, wenn möglich zur Gänze durch lokale Energiebereitsteller bereitgestellt oder zu Zeiten niedriger Energiekosten realisiert, zu ermöglichen. Energieverbraucher mit einem gut planbaren Energiebedarf haben eine niedrigere Priorität als Energieverbraucher mit einem unmittelbaren Energieverbrauch. Bei solchen Energieverbrauchern wird die Energie abhängig von dem Zeitpunkt der Benutzung durch den Benutzer aktuell gebraucht und der Energieverbrauch kann nicht auf später verschoben werden. Anhand vorstehender Vorgaben ist es für den Fachmann nachvollziehbar welchem Energieverbraucher die Energieverteileinheit 10 wann Energieverbrauch empfehlen würde.

Die erfindungsgemäße Energieverteileinheit 10 zeichnet sich dadurch aus, dass sie Start-Empfehlungen zu den von ihr ermittelten optimalen Zeitpunkten an die Bedarfskommunikationseinheiten 17 jener Energieverbraucher übermittelt, die zur Erfüllung obiger Kriterien jetzt oder zu einem bestimmten in der Start-Empfehlung angegebenen Zeitpunkt mit dem angemeldeten Energieverbrauch beginnen sollen. So wird beispielsweise die um 21h eingegangene Anmeldung des Energieverbrauchs des Geschirrspülers 12 erst um 23h zu einer Start-Empfehlung der Energieverteileinheit 10 an den Geschirrspüler 12 führen, da ab 23h der Nachtstrom gemäß aktueller Information des Smartmeters 5 nur geringe Energiekosten hat. Ebenso könnte die Start-Empfehlung an den Geschirrspüler 12 erst um 23:30h ergehen, da zuvor noch der Warmwasserboiler 11 und der Tiefkühlschrank 14 einen höher priorisierten Energiebedarf angemeldet haben. Wenn das Windrad 7 um 20h wegen starken Windes ausreichen Energie lokal und aktuell zur Verfügung stellt, dann kann der von den Energieverbrauchern angemeldete Energiebedarf bereist früher durch eine Start-Empfehlung gestartet und lokal ohne zusätzliche Energiekosten abgedeckt werden.

Besonders vorteilhaft an dem Energieverteilsystem 2 ist, dass von der Energieverteileinheit 10 nur Empfehlungen an die Bedarfskommunikationseinheiten 17 der Energieverbraucher übermittelt werden. Sie Steuerungen 16 der einzelnen Energieverbraucher bleiben Master in diesem Energieverteilsystem 2, da diese am besten wissen wann der Energieverbraucher einen unmittelbaren Energiebedarf hat und unbedingt über das Energienetz 4 mit Energie versorgt werden muss. Nach Möglichkeit folgen die Steuerungen den über die Bedarfskommunikationseinheiten 17 von der Energieverteileinheit 10 erhaltenen Start-Empfehlungen, um den Energieverbrauch in dem Haus 1 gering zu halten, es besteht aber keine Gefahr, dass beispielsweise das Kühlgut in dem Tiefkühlschrank 14 verdirbt, da jeder Energieverbraucher direkt mit dem Energienetz 4 zum Abdecken seines Energieverbrauchs verbunden ist.

Wenn ein Energieverbraucher bei fehlender Start-Empfehlung seinen unmittelbar benötigten Energieverbrauch aus dem Energienetz 2 abdeckt, dann Storniert die Bedarfskommunikationseinheit 17 dieses Energieverbrauchers anschließend den angemeldeten Energiebedarf bei der Energieverteileinheit 10. Hierdurch wird vermieden, dass Schaden an dem Energieverbraucher oder von dem Energieverbraucher bearbeiteten Teilen entsteht und, dass nicht mehr benötigter Energiebedarf als angemeldeter Energiebedarf in der Energieverteileinheit 10 bestehen beleibt.

Die Energieverteileinheit 10 ist weiters zum Senden einer Start-Empfehlung auch an Energieverbraucher ausgebildet, die keinen Energiebedarf angemeldet haben, wenn in dem Energienetz 4 aktuell Energieüberschuss besteht. Es könnte beispielsweise das Windrad 7 oder das Solarpannel 6 zu einem Zeitpunkt viel Energie in das Energienetz 4 einspeisen, wenn relativ wenig Energieverbrauch erfolgt oder von Energieverbrauchern angemeldet wurde. In diesem Fall übermittelt das Speise-Smartmeter 9 an die Energieverteileinheit 10, dass Energie in das übergeordnete Energienetz 4 abgegeben wird. Um zu verhindern, dass ein paar Minuten oder Stunden später wieder Energie aus dem übergeordneten Energienetz 4 genommen werden muss, übermittelt die Energieverteileinheit 10 eine Start-Empfehlung an alle Energieverbraucher in dem Haus. So könnte der Tiefkühlschrank beispielsweise, obwohl die Kühltemperatur noch nicht auf die Maximaltemperatur angestiegen ist, sein Kühlaggregat einschalten und so den Kühlvorgang vorziehen. Hierdurch ist der Vorteil erhalten, dass vermehrt kostengünstig zur Verfügung stehende lokale bereitgestellte Energie genutzt wird. Folglich wird das öffentliche Stromnetz entlastet und es werden die Netzgebühren eingespart.

Das Energieverteilsystem 2 funktioniert besonders gut, wenn Energieverbraucher mit der Energieverteileinheit 10 verbunden sind, die bereits Bedarfskommunikationseinheiten 17 in der Steuerung 16 des Energieverbrauchers vorgesehen haben. In diesem Fall kann die Bedarfskommunikationseinheit 17 auf in der Steuerung 16 vorliegenden Messwerte, wie beispielsweise der Wassertemperatur in dem Warmwasserboiler 11, zugreifen und diese Informationen an die Energieverteileinheit 10 zur besseren Priorisierung des angemeldeten Energiebedarfs übermitteln. Um auch bestehende Energieverbraucher ohne in der Steuerung 16 vorgesehene Bedarfskommunikationseinheit 17 in das Energieverteilsystem 2 einbinden zu können weist das Energieverteilsystem 2 auch als separate Einheit ausgebildete Bedarfskommunikationseinheiten auf.

So eine Bedarfskommunikationseinheit 17 muss aber nicht über Kommunikationsleitungen 18 mit der Energieverteileinheit 10 verbunden sein. Die Bedarfskommunikationseinheit 17 der Waschmaschine 13 weist eine WLAN-Einheit 19 auf, der eine die Waschmaschine 13 eindeutig kennzeichnende IP-Adresse zugeordnet ist. Die WLAN-Einheit 19 kommuniziert mit der WLAN-Einheit 19 der Energieverteileinheit 10 kontaktlos und meldet ihren zukünftigen Energieverbrauch auf diese Übertragungsart an. Hierdurch ist der Vorteil erhalten, dass die Installation des Energieverteilsystems 2 wesentlich leichter realisiert werden kann.

Die Bedarfskommunikationseinheit 17 ist so ausgebildet, dass bei fehlender Kommunikation mit der Energieverteileinheit 10 oder bei eigener Fehlfunktion die Verbindung des Energieverbrauchers mit dem Energienetz 4 immer gewährleistet ist so, als wenn der Energieverbraucher keine Steuerung 16 aufweisen würde. Hierdurch ist der Vorteil erhalten, dass es beim Ausfall des Energieverteilsystems 2 nur zu dem derzeit üblichen Energieverbrauch aber sicherlich zu keinem Schaden an Energieverbrauchern kommen kann.

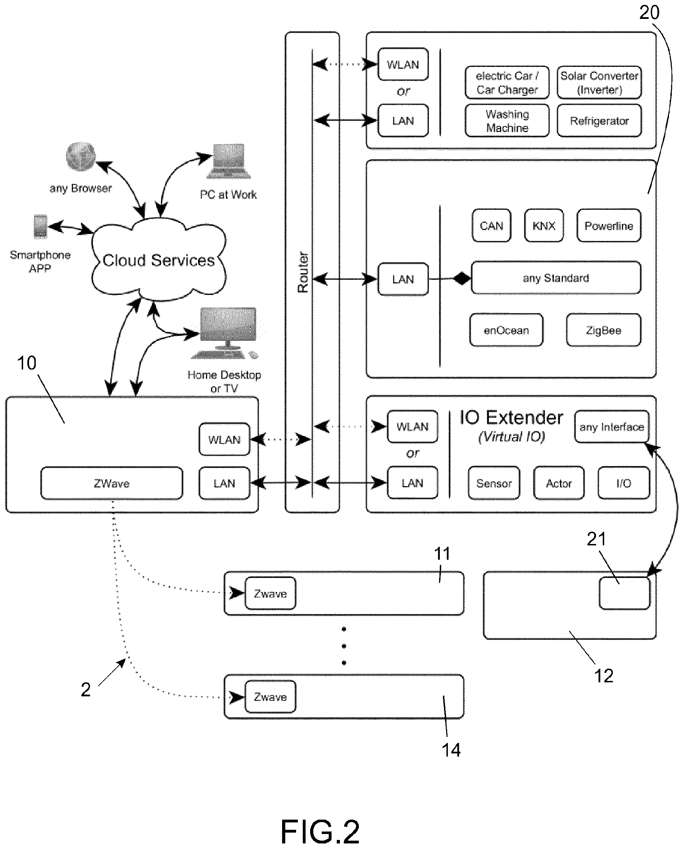

Figur 2 zeigt wie die Energieverteileinheit 10 zur Kommunikation und Programmierung realisiert ist. Die Energieverteileinheit 10 ist mit dem Internet verbunden und als "Cloud Service" als Browser Applikation, von einem Home Desktop, TV oder PC aus oder mittels Smartphone programmierbar. Die Energieverteileinheit 10 weist eine Z Wave Kommunikationseinheit auf, um mit Energieverbrauchern in ihrer näheren Umgebung, also beispielsweise in einem Haus, zu kommunizieren. Z Wave ist ein drahtloser Kommunikationsstandard von der Z Wave Alliance um die drahtlose Kommunikation von Heimgeräten zu verbessern. Der Warmwasserboiler 11 und der Tiefkühlschrank 14 unterstützen auch bereits diesen Kommunikationsstandard und der Geschirrspüler 13 kommuniziert über WLAN, weshalb die in Figur 1 dargestellten Kommunikationsleitungen 18 durch drahtlose Kommunikation ersetzt werden können. Dem Fachmann sind auch weitere kontaktlose Kommunikationsstandards, wie beispielsweise ZigBee oder EnOcean bekannt, die ebenfalls zur kontaktlosen Kommunikation verwendet werden könnten. Der Geschirrspüler 12 hat noch keine Z Wave Kommunikationseinheit, weshalb er über einen Wechselrichter 21 drahtgebunden mit einem IO Extender und über einen Router mit der Energieverteileinheit 10 kommuniziert. Über diesen IO Extender könnten weitere Schnittstellen, wie beispielsweise die RS-485 Schnittstelle, zur Anbindung an die Energieverteileinheit 10 genutzt werden. Ein IP Gateway 20 kann für weitere Übertragungsarten wie KNX oder Power-LAN zur Energieverteileinheit 10 hin verwendet werden. Diese Art der Anbindung an die Energieverteileinheit 10 stellt sicher, dass praktisch jeder Energieverbraucher an die Energieverteileinheit 10 zum Kommunizieren angebunden werden kann. Eine Vielzahl an weiteren Geräten mit eigenen IP-Adressen könnten mit der Energieverteileinheit 10 verbunden sein.

Das beschriebene Energieverteilsystem kann auch in Wohnhausanlagen oder gewerblichen Gebäuden zum sparen von Energiekosten verwendet werden.

Eine weitere Möglichkeit ist ein Betrieb mit reduzierter Leistung. Es ist möglich den Warmwasserboiler 11 oder auch eine Wärmepumpe/Klimaanlage mit 0-100% ihrer Nennleistung zu betreiben. So kann zum Beispiel bei dem Warmwasserboiler mit 1kW Nennleistung bei einem Überschuss der lokalen Energiebereitsteller von 500W dieser Überschuss durch die Steuerung 16 gesteuert verbraucht werden. Dadurch verlängert sich natürlich die Betriebszeit aber die vom Energienetz 4 eingespeiste Energie kann auf nahezu Null geregelt werden. Da diese Betriebsart nicht für alle Energieverbraucher verwendet werden kann ohne Schaden am Energieverbraucher oder beispielsweise der Wäsche zu verursachen muss diese Betriebsart in der Energieverteileinheit 10 für den jeweiligen Energieverbraucher bei einer Erstinstallation freigegeben worden sein.

## Patentansprüche

1. Energieverteilsystem (1) mit Energiebereitstellern (6, 7) zum Bereitstellen von Energie für ein Energienetz (4) und mit Energieverbrauchern (11, 12, 13, 14), deren Energiebedarf aus dem Energienetz (4) abzudecken ist, wobei eine Energieverteileinheit (10) zum Verteilen der bereitgestellten Energie aus dem Energienetz (4) an die Energieverbraucher (11, 12, 13, 14) vorgesehen ist, wobei jeder Energieverbraucher (11, 12, 13, 14) direkt mit dem Energienetz (4) zum Abdecken seines Energieverbrauchs verbunden ist und eine Steuerung aufweist, sodass jeder Energieverbraucher (11, 12, 13, 14) entsprechend seiner eigenen Steuerung auch bei Ausfall der Energieverteileinheit (10) seinen Energiebedarf selbstständig aus dem Energienetz abdecken kann, und, dass jeder Energieverbraucher (11, 12, 13, 14) eine Bedarfskommunikationseinheit (17) aufweist, die zum Anmelden eines zukünftigen Energiebedarfs des Energieverbrauchers (11, 12, 13, 14) bei der Energieverteileinheit (10) ausgebildet ist und die zum Empfangen von Start-Empfehlungen von der Energieverteileinheit (10) ausgebildet ist, um mit dem angemeldeten Energieverbrauch durch den Energieverbraucher (11, 12, 13, 14) zu beginnen.

2. Energieverteilsystem (1) gemäß Anspruch 1, **dadurch gekennzeichnet, dass** der Energieverbraucher (11, 12, 13, 14) bei fehlender Start-Empfehlung zum selbstständigen Abdecken seines unmittelbar benötigten Energieverbrauchs ausgebildet ist, wonach die Bedarfskommunikationseinheit (17) dieses Energieverbrauchers (11, 12, 14) zum Stornieren des angemeldeten Energiebedarfs bei der Energieverteileinheit (10) ausgebildet ist.

3. Energieverteilsystem (1) gemäß einem der vorherigen Ansprüche, **dadurch gekennzeichnet, dass** die Energieverteileinheit (10) zum Senden einer Start-Empfehlung auch an Energieverbraucher (11, 12, 13, 14), die keinen Energiebedarf angemeldet haben, ausgebildet ist, wenn in dem Energienetz (4) Energieüberschuss besteht.

4. Energieverteilsystem (1) gemäß einem der vorherigen Ansprüche, **dadurch gekennzeichnet, dass** die Bedarfskommunikationseinheit (11, 12, 13, 14) zum Anmelden eines Energiebedarfs eine oder mehrere der folgenden Informationen an die Energieverteileinheit (10) übermittelt: geplantes Leistungsprofil des Energiebedarfs; Priorität des Energiebedarfs; spätest möglicher Zeitpunkt zum Abdecken des Energiebedarfs.

5. Energieverteilsystem (1) gemäß einem der vorherigen Ansprüche, **dadurch gekennzeichnet, dass** lokale Energiebereitsteller (6, 7), insbesondere basierend auf Solarenergie und/oder Windenergie, Energie für das Energienetz (4) bereitstellen und, dass die von den lokalen Energiebereitstellern (6, 7) aktuell bereitgestellte Energie von der Energieverteileinheit (10) durch Start-Empfehlungen an lokale Energieverbraucher (11, 12, 13, 14) zum Abdecken des lokalen momentanen und/oder zukünftigen angemeldeten Energieverbrauchs genutzt wird.

6. Energieverteilsystem (1) gemäß einem der vorherigen Ansprüche, **dadurch gekennzeichnet, dass** ein Smartmeter (5) eines übergeordneten Energiebereitstellers mit der Energieverteileinheit (10) verbunden ist, wobei die Energieverteileinheit (10) zum Senden einer Start-Empfehlung an Energieverbraucher (11, 12, 13, 14) ausgebildet ist, wenn das Smartmeter (5) oder eine andere Datenquelle, insbesondere ein Webservice einen in Bezug auf die letzten Stunden oder Tage günstigen aktuellen Energiepreis angibt.

7. Energieverteilsystem (1) gemäß einem der vorherigen Ansprüche, **dadurch gekennzeichnet, dass** das Energieverteilsystem (1) zum Verteilen der Energie in einem Haus vorgesehen ist, in dem Energieverbraucher mit unmittelbarem Energiebedarf und somit hoher Priorität und Energieverbraucher, insbesondere ein Kühlschrank (14), Geschirrspüler (12) oder eine Waschmaschine (13), mit planbarem Energiebedarf und somit niedrigerer Priorität vorgesehen sind, wobei die Energieverteileinheit (10) zum Berücksichtigen der Priorität des Energiebedarfs bei der Übermittlung der Start-Empfehlungen an die einzelnen Energieverbraucher ausgebildet ist.

8. Energieverteilsystem (1) gemäß Anspruch 5, **dadurch gekennzeichnet, dass** die Bedarfskommunikationseinheit (17) zum Betrieb des Energieverbrauchers (11, 12, 13, 14) mit einer geringeren Energie als mit der Nennleistung des Energieverbrauchers (11, 12, 13, 14) ausgebildet ist, wenn durch die lokalen Energiebereitsteller (6, 7) nicht ausreichend Energie zum Betrieb mit Nennleistung zur Verfügung stellen und dieser Betrieb für den jeweiligen Energieverbraucher freigegeben ist.

9. Energieverteilsystem (1) gemäß einem der vorherigen Ansprüche, **dadurch gekennzeichnet, dass** die Bedarfskommunikationseinheiten (17) bei fehlender Kommunikation mit der Energieverteileinheit (10) oder bei eigener Fehlfunktion zum Gewährleisten der normale Funktion des Energieverbrauchers (11, 12, 13, 14) ausgebildet ist.

## Claims

1. An energy distribution system (1) with energy providers (6, 7) for providing energy for an energy network (4) and with energy consumers (11, 12, 13, 14) for which the energy demand is to be covered from the energy network (4), wherein an energy distribution unit (10) is provided for distributing the available energy from the energy network (4) to the energy consumers (11, 12, 13, 14), wherein each energy consumer (11, 12, 13, 14) is directly connected to the energy network (4) for covering its energy consumption and which has a controller, so that each energy consumer (11, 12, 13, 14), corresponding to its own controller, can, even in case of failure of the energy distribution unit (10), independently cover its energy demand from the energy network, and so that each energy consumer (11, 12, 13, 14) has a needs communication unit (17), which is configured for logging a future energy demand of the energy consumer (11, 12, 13, 14) with the energy distribution unit (10), and which is configured for receiving start recommendations from the energy distribution unit (10), in order to start with the logged energy consumption by the energy consumer (11, 12, 13, 14).

2. The energy distribution system (1) according to claim 1, **characterised in that** the energy consumer (11, 12, 13, 14), in case of a missing start recommendation, is configured for independently covering its immediately needed energy consumption, whereupon the needs communication unit (17) of this energy consumer (11, 12, 14) is configured for cancelling the energy demand logged with the energy distribution unit (10).

3. The energy distribution system (1) according to one of the preceding claims, **characterised in that** the energy distribution unit (10) is configured, in case there exists an energy surplus in the energy network (4), to send a start recommendation also to energy consumers (11, 12, 13, 14), which have not logged an energy demand.

4. The energy distribution system (1) according to one of the preceding claims, **characterised in that** the needs communication unit (11, 12, 13, 14) communicates one or more of the following information to the energy distribution unit (10) for logging an energy demand: a scheduled energy demand performance profile, a priority of the energy demand, a latest possible time for covering the energy demand.

5. The energy distribution system (1) according to one of the preceding claims, **characterised in that** local energy providers (6, 7) based, in particular, on solar energy and/or wind energy, provide energy to the energy network (4) and **in that** the energy currently provided by local energy providers (6, 7) is utilised by the energy distribution unit (10) by way of start recommendations to local energy consumers (11, 12, 13, 14) for covering the local momentary and/or future logged energy consumption.

6. The energy distribution system (1) according to one of the preceding claims, **characterised in that** a smart meter (5) of a superordinated energy provider is connected to the energy distribution unit (10), wherein the energy distribution unit (10) is configured for sending a start recommendation to energy consumers (11, 12, 13, 14), if the smart meter (5) or another data source, in particular a web service, indicates a current energy price which is favourable with regard to recent hours or days.

7. The energy distribution system (1) according to one of the preceding claims, **characterised in that** the energy distribution system (1) is provided for distributing energy in a house, in which energy consumers, which have an immediate energy demand and thus high priority, and energy consumers, in particular a fridge (14), dishwasher (12) or a washing machine (13) with predictable energy demand and thus lower priority are provided, wherein the energy distribution unit (10) is configured to take into account the priority of energy demand when communicating start recommendations to individual energy consumers.

8. The energy distribution system (1) according to claim 5, **characterised in that** the needs communication unit (17) is configured to operate the energy consumer (11, 12, 13, 14) with energy lower than nominal power of the energy consumer (11, 12, 13, 14), if the local energy providers (6, 7) do not offer sufficient energy for operation with nominal power, and this operation has been released for the respective energy consumer.

9. The energy distribution system (1) according to one of the preceding claims, **characterised in that** the needs communication units (17) is configured, in case there is no communication with the energy distribution unit (10) or in case it is itself malfunctioning, to ensure functioning as normal of the energy consumer (11, 12, 13, 14).

## Revendications

1. Système de distribution d'énergie (1) avec fournisseurs d'énergie (6, 7) pour fournir de l'énergie pour un réseau d'énergie (4) et avec des consommateurs d'énergie (11, 12, 13, 14), dont le besoin en énergie est à couvrir à partir d'un réseau d'énergie (4), une unité de distribution d'énergie (10) étant prévue pour distribuer de l'énergie fournie à partir du réseau d'énergie (4) à des consommateurs d'énergie (11, 12, 13, 14), chaque consommateur d'énergie (11, 12, 13, 14) étant directement relié au réseau d'énergie (4) pour couvrir sa consommation d'énergie et comportant une commande de telle sorte que chaque consommateur d'énergie (11, 12, 13, 14) peut couvrir son besoin en énergie indépendamment à partir du réseau d'énergie selon sa propre commande même en cas de panne de l'unité de distribution d'énergie (10) et de sorte que chaque consommateur d'énergie (11, 12, 13, 14) comporte une unité de communication de besoin (17), qui est constituée pour annoncer un futur besoin en énergie du consommateur d'énergie (11, 12, 13, 14) auprès de l'unité de distribution d'énergie (10) et qui est constituée pour recevoir des recommandations de mise en marche de l'unité de distribution d'énergie (10) pour commencer la consommation d'énergie annoncée par le consommateur d'énergie (11, 12, 13, 14).

2. Système de distribution d'énergie (1) selon la revendication 1, **caractérisé en ce que** le consommateur d'énergie (11, 12, 13, 14) est constitué pour la couverture indépendante de sa consommation d'énergie directement nécessaire en cas de recommandation de mise en marche défectueuse, l'unité de communication de besoin (17) de ce consommateur d'énergie (11, 12, 14) étant constituée après cela pour annuler le besoin en énergie annoncé auprès de l'unité de distribution d'énergie (10).

3. Système de distribution d'énergie (1) selon l'une quelconque des revendications précédentes, **caractérisé en ce que** l'unité de distribution d'énergie (10) est constituée pour envoyer une recommandation de mise en marche également aux consommateurs d'énergie (11, 12, 13, 14), qui n'ont annoncé aucun besoin en énergie, si un excédent d'énergie existe dans le réseau d'énergie (4) .

4. Système de distribution d'énergie (1) selon l'une quelconque des revendications précédentes, **caractérisé en ce que** l'unité de communication de besoin (11, 12, 13, 14) transmet à l'unité de distribution d'énergie (10) pour annoncer un besoin en énergie, une ou plusieurs des informations suivantes : profil planifié de puissance du besoin en énergie, priorité du besoin en énergie, moment le plus tard possible pour couvrir le besoin en énergie.

5. Système de distribution d'énergie (1) selon l'une quelconque des revendications précédentes, **caractérisé en ce que** des fournisseurs d'énergie locaux (6, 7) fournissent de l'énergie pour le réseau d'énergie (4) notamment en se basant sur l'énergie solaire et/ou l'énergie éolienne et **en ce que** l'énergie actuellement fournie par les fournisseurs d'énergie locaux (6, 7) est utilisée par l'unité de distribution d'énergie (10) par les recommandations de mise en marche aux consommateurs d'énergie locaux (11, 12, 13, 14) pour couvrir la consommation d'énergie locale momentanée et/ou future annoncée.

6. Système de distribution d'énergie (1) selon l'une quelconque des revendications précédentes, **caractérisé en ce qu'**un compteur intelligent (5) d'un fournisseur d'énergie supérieur est relié à l'unité de distribution d'énergie (10), l'unité de distribution d'énergie (10) étant constituée pour envoyer une recommandation de mise en marche aux consommateurs d'énergie (11, 12, 13, 14), si le compteur intelligent (5) ou une autre source de données, notamment un service sur Internet indique un prix d'énergie actuel favorable en référence aux dernières heures ou derniers jours.

7. Système de distribution d'énergie (1) selon l'une quelconque des revendications précédentes, **caractérisé en ce que** le système de distribution d'énergie (1) est prévu pour distribuer de l'énergie à une maison, dans laquelle des consommateurs d'énergie avec besoin en énergie direct et de ce fait une priorité élevée et des consommateurs d'énergie, notamment un réfrigérateur (14), un lave-vaisselle (12) ou une machine à laver (13), sont prévus avec un besoin en énergie planifiable et de ce fait une priorité plus faible, l'unité de distribution d'énergie (10) étant constituée pour prendre en compte la priorité du besoin en énergie lors de la transmission des recommandations de mise en marche adressées aux consommateurs d'énergie individuels.

8. Système de distribution d'énergie (1) selon la revendication 5, **caractérisé en ce que** l'unité de communication de besoin (17) est constituée pour faire fonctionner le consommateur d'énergie (11, 12, 13, 14) avec une énergie plus faible qu'avec la puissance nominale du consommateur d'énergie (11, 12, 13, 14), si de l'énergie insuffisante n'est pas mise à disposition par les fournisseurs d'énergie locaux (6, 7) pour faire fonctionner avec une puissance nominale et ce fonctionnement est autorisé pour le consommateur d'énergie respectif.

9. Système de distribution d'énergie (1) selon l'une quelconque des revendications précédentes, **caractérisé en ce que** l'unité de communication de besoin (17) est constituée pour garantir le fonctionnement normal du consommateur d'énergie (11, 12, 13, 14) en cas de communication défectueuse avec l'unité de distribution d'énergie (10) ou en cas de fonctionnement propre défectueux.
